# EUROPEAN PATENT APPLICATION

(11) **EP 2 927 545 A1**
(43) Date of publication of application: **07.10.2015**
(21) Application number: 15160036.8
(22) Date of filing: 20.03.2015
(51) Int. Cl.: F16K 1/38, F16K 1/42, F16K 3/24, F16K 25/00

(54) **Cage valve**

(30) Priority: 31.03.2014 JP 2014072863
(71) Applicant: Azbil Corporation, Chiyoda-ku Tokyo 100-6419 (JP)
(72) Inventor: Yoshida, Norifumi, Tokyo, Tokyo 100-6419 (JP); Nakamura, Kenichi, Tokyo, Tokyo 100-6419 (JP)
(74) Representative: Tischner, Oliver

(57) **Abstract**

A cage valve 1 is provided with a valve body 10, a bonnet 20, a cage 30, and a valve plug 40. Here a ring-shaped thin wall portion 34c that functions as a self-seal is formed in an upper valve seat 32 of the cage 30. Moreover, a ring-shaped thin wall portion 43c that functions as a self-seal is formed in a lower valve seating portion 42 of the valve plug 40.

## Description

### [FIELD OF TECHNOLOGY]

The present invention relates to a cage valve for adjusting a flow rate of a fluid within a pipe.

### [Prior Art]

Conventionally, cage valves have been known as valves for adjusting flow rates of fluids within pipes (referencing, for example, Patent Citation 1). This cage valve comprises a valve body that has an inflow path and an outflow path, a cylindrical cage, and a plug that can advance and retract within the cage, where the plug advances and retracts to open and close a window through which a fluid flows, which is formed within the cage, to thereby control the flow rate of the fluid that flows through a pipe that is connected to the cage valve.

### [Prior Art Citations]

### [Patent Citations]

### [Patent Document 1]

Japanese Unexamined Patent Application Publication H8-270808

### [Summary of the Invention]

### [Problem Solved by the Present Invention]

In recent years, it has been anticipated that such cage valves would be used as cutoff valves. Cutoff valves cut off the flow of a fluid within a pipe when there is an emergency, such as in the event of an earthquake, fire, or the like. Consequently, valves that are used as cutoff valves require high sealing performance and reliability. Furthermore, because of the need for energy conservation and power conservation, preferably they should cut off high pressures at low power.

Given this, the object of the present invention is to provide a cage valve able to further improve sealing performance.

### [Means for Solving the Problem]

In order to solve the problem set forth above, the cage valve according to the present invention comprises: a valve body having a fluid inflow path and outflow path; a cylindrical cage, secured within the valve body, having a window connecting to the inflow path and/or the outflow path; a valve plug for opening/closing the window by sliding within the cage along the axial line of the cage; and a self-sealing structure, provided in the cage and/or the valve plug, for improving sealing performance between the cage and the valve plug by bearing pressure of a fluid when the valve plug is in a position wherein the window is fully closed; wherein the self-sealing structure is formed through machining an inner peripheral wall surface of the cage or an outer peripheral wall surface of the valve plug.

In the cage valve set forth above: the valve plug may comprise a first seating portion, provided on an outer peripheral wall of a top portion side, and a second seating portion, provided on an outer peripheral wall of a bottom portion side, formed as cylinders with closed tops; the cage may comprise a first valve seat, formed in the inner peripheral wall further toward the first seating portion side than the window, and which contacts the first seating portion removably, and a second seating portion, formed in the inner peripheral wall further toward the second seating portion side than the window, and which contacts the second seating portion removably; and the self-sealing structure may be formed on the second seating portion of the valve plug or on the second seating portion of the valve plug and the first valve seat of the cage, if the fluid is to flow into the cage through the window of the cage from the inflow path and flow out to the outflow path from the bottom portion side of the cage.

Moreover, in the cage valve set forth above: the valve plug may comprise a first seating portion, provided on an outside wall of a top portion side, and a second seating portion, provided on an outer peripheral wall of a bottom portion side, formed as cylinders with closed tops; the cage may comprise a first valve seat, formed in the inner peripheral wall further toward the first seating portion side than the window, and which contacts the first seating portion removably, and a second seating portion, formed in the inner peripheral wall further toward the second seating portion side than the window, and which contacts the second seating portion removably; and the self-sealing structure may be formed on the second valve seat of the cage or on the second valve seat of the cage and the first seating portion of the valve plug, if the fluid is to flow into the cage through the bottom portion side of the cage from the inflow path and flow out to the outflow path from the window of the cage.

Moreover, in the cage valve set forth above: the self-sealing structure may be structured from a first ring-shaped groove and a second ring-shaped groove that are formed in parallel along the circumferential direction of the cage on the inner peripheral wall surface of the cage, and a first ring-shaped thin wall portion, formed between the first ring-shaped groove and the second ring-shaped groove, and that deforms by bearing the pressure of a fluid.

Here the boundaries between the first ring-shaped thin wall portion and the bottom portion of the first ring-shaped groove and the second ring-shaped groove may be chamfered into curved shapes.

Moreover, in the cage valve set forth above: the self-sealing structure may be structured from a third ring-shaped groove and a fourth ring-shaped groove that are formed in parallel along the circumferential direction of the plug on the outer peripheral wall surface of the valve plug, and a second ring-shaped thin wall portion, formed between the third ring-shaped groove and the fourth ring-shaped groove, and that deforms by bearing the pressure of a fluid.

Here the boundaries between the second ring-shaped thin wall portion and the bottom portion of the third ring-shaped groove and the fourth ring-shaped groove may be chamfered into curved shapes. [Effects of the Invention]

In the present invention, a cage and at least one valve plug are provided, and a self-sealing structure that improves the sealing performance between the valve plug and the cage step that bears the pressure of the fluid when the valve plug is positioned so as to close the window is formed through machining the inner peripheral wall surface of the cage or the outer peripheral wall surface of the valve plug, thus enabling a greater improvement in the sealing performance while using an inexpensive structure that does not increase the number of components in the cage valve.

### [BRIEF DESCRIPTIONS OF THE DRAWINGS]

FIG. 1 is a cross-sectional diagram illustrating a structure for a cage valve according to an embodiment according to the present invention.
FIG. 2 is a cross-sectional diagram illustrating a modified example of a cage valve according to the embodiment according to the present invention
FIG. 3 is a cross-sectional diagram illustrating a modified example of a cage valve according to the embodiment according to the present invention
FIG. 4 is a cross-sectional diagram illustrating a modified example of a cage valve according to the embodiment according to the present invention

### [Forms for Carrying Out the Present Invention]

### [First Embodiment]

A first embodiment according to the present invention will be explained in detail below, referencing the drawings.

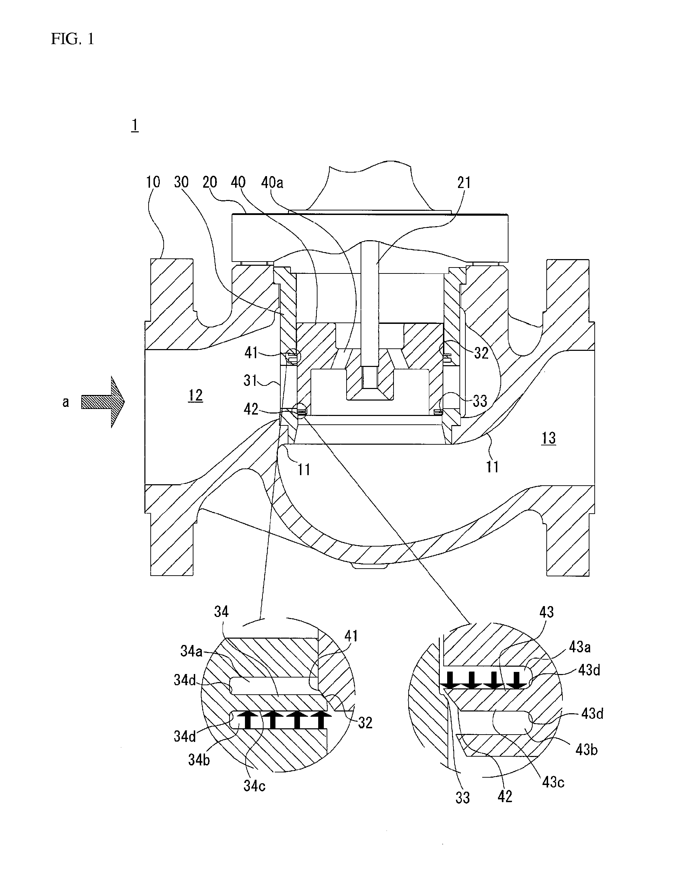

As illustrated in FIG. 1, a cage valve 1 according to the present embodiment comprises a valve body 10, and a bonnet 20 that is connected, through bolts, or the like, to a top end opening portion thereof. Note that in the below, the explanation will be for a state that is correctly positioned relative to the plane of the paper in FIG. 1, with up in the plane of the paper being termed "up" and down being termed "down."

Two flow paths 12 and 13 are formed separated by a partitioning wall 11 within the valve body 10. These flow paths 12 and 13 are joined by pipes and flange portions, not shown, where the fluid flows into the flow path 12 from the direction indicated by the arrow "a" in the figure. Consequently, in the present embodiment, the flow path 12 is an inflow path and the flow path 13 is an outflow path.

The bottom end outer peripheral edge portion of the cage 30, which is formed into a cylindrical shape, fits into a valve seat opening that is open in the partitioning wall 11 of the valve body 10. The top end portion of this cage 30 is held between the valve body 10 and the bonnet 20.

In the sidewall of the cage 30, there are multiple windows 31, for the passage of fluid, connected to the flow path 12, to enable passage between the flow path 12 and the flow path 13.

An upper valve seat 32 and a lower valve seat 33 are formed respectively above and below the windows 31 of the inner peripheral wall of the cage 30.

A valve stem 21 is supported, so as to be able to move upward and downward freely, on the bonnet 20. The top end portion of this valve stem 21 is connected to a driving portion, not shown, for moving the valve stem 21 upward and downward, where a valve plug 40 is secured at the bottom end portion of the valve stem 21.

The valve plug 40 is inserted into the cage 30, and is supported so as to be able to slide within the cage 30 along the axial line of the cage 30. The valve plug 40 is formed as a cylinder that is open in the downward direction and closed at the top. In this valve plug 40, an upper seating portion 41, which can contact the upper valve seat 32 that is formed in the cage 30, and a lower seating portion 42, which can contacted the lower valve seat 33 that is formed in the cage 30, are formed. Moreover, a balancing hole 40a, for causing the internal pressure at the top and the bottom of the cage 30 to be uniform, is formed in the top portion of the valve plug 40.

In the present embodiment, self-sealing structures 34 and 43, which improve the sealing performance between the cage 30 and the valve plug 40 by bearing pressure of the fluid when the valve plug 40 is positioned so as to fully close the window 31 of the cage 30, are formed in the upper valve seat 32 of the cage 30 and the lower seating portion 42 of the valve plug 40, through machining the inner peripheral wall surface of the cage 30 and the outer peripheral wall surface of the valve plug 40.

Specifically, the self-sealing structure 34 is formed in essentially the center portion of the inner peripheral wall of the cage 30, and is structured from a first ring-shaped groove 34a that is concentric with the axial line of the cage 30, a second ring-shaped groove 34b that is concentric with the axial line of the cage 30, formed below the first ring-shaped groove 34a, and a first ring-shaped thin wall portion 34c that is deformed through bearing the pressure of the fluid, formed between the first ring-shaped groove 34a and the second ring-shaped groove 34b. The first ring-shaped thin wall portion 34c is that which functions as the self-seal, where the upper valve seat 32 is formed on an end portion thereof. Here the first ring-shaped groove 34a and the second ring-shaped groove 34b are formed so as to be parallel with each other, along the circumferential direction of the cage 30. Moreover, a connecting portion 34d, positioned at the boundaries between the first thin wall portion 34c and the bottom portions (roots) of the first ring-shaped groove 34a and second ring-shaped groove 34b are chamfered into curved shapes (shapes wherein the cross-sections are essentially arcs).

Moreover, the self-sealing structure 43 is formed in the bottom end portion of the outer peripheral wall of the valve plug 40, and is structured from a third ring-shaped groove 43a that is concentric with the axial line of the valve plug 40, a fourth ring-shaped groove 43b that is concentric with the axial line of the valve plug 40, formed below the third ring-shaped groove 43a, and a second ring-shaped thin wall portion 43c that is deformed through bearing the pressure of the fluid, formed between the third ring-shaped groove 43a and the fourth ring-shaped groove 43b. The second ring-shaped thin wall portion 43c is that which functions as the self-seal, where the lower seating portion 42 is formed on an end portion thereof. Here the third ring-shaped groove 43a and the fourth ring-shaped groove 43b are formed so as to be parallel with each other, along the circumferential direction of the valve plug 40. Moreover, a connecting portion 43d, positioned at the boundaries between the second thin wall portion 43c and the bottom portions (roots) of the third ring-shaped groove 43a and fourth ring-shaped groove 43b are chamfered into curved shapes (shapes wherein the cross-sections are essentially arcs).

The operation of the cage valve 1 according to the present embodiment will be explained next.

When a fluid flows within a pipe wherein the cage valve 1 is equipped, the valve plug 40 is moved upward to produce a state wherein the upper seating portion 41 and the lower seating portion 42 are separated from the upper valve seat 32 or lower valve seat 33 of the cage 30. At this time, the fluid that is supplied into the flow path 12 flows through the window 31 into the cage 30, and flows out from the bottom end of the cage 30 into the flow path 13. At this time, adjustments to the flow rate of the fluid are carried out by changing the area of opening of the window 31 by raising or lowering the valve plug 40.

On the other hand, when the passage for the fluid within the pipe that is provided with the cage valve 1 is to be blocked, the valve plug 40 is moved downward to cause the upper seating portion 41 to contact the upper valve seat 32 of the cage valve 30 and the lower seating portion 42 to contact the lower valve seat 33 of the cage 30. At this time, the window 31 of the cage 30 is blocked by the outer peripheral wall of the valve plug 40, and the gap between the inner peripheral wall of the cage 30 and the outer peripheral wall of the valve plug 40 is blocked by the upper valve seat 32 and lower valve seat 33 of the cage 30, and the upper seating portion 41 and lower seating portion 42 of the valve plug 40, which are positioned above and below the window 31. Because of this, the fluid that flows in from the flow path 12 cannot flow into the cage 30. As a result, the fluid within the pipe wherein the cage valve 1 is equipped is blocked by the cage valve 1.

Because the self-sealing structure 34 is formed in the cage 30 above the window 31, at this time the fluid that arrives at the self-sealing structure 34 through the window 31 and the gap between the inner peripheral wall of the cage 30 and the outer peripheral wall of the valve plug 40 applies pressure to the first thin wall portion 34c in the upward direction, as shown by the arrow in FIG. 1. Because of this, the upper valve seat 32, which is formed on the outer edge portion of the first thin wall portion 34c, is pressed against the upper seating portion 41 of the valve plug 40, causing the upper valve seat 32 and the upper seating portion 41 to be pressed together more strongly, thus improving the sealing performance between the upper valve seat 32 and the upper seating portion 41. The result is the ability to prevent more fully leakage of fluid from between the upper valve seat 32 and the upper seating portion 41.

Similarly, a self-sealing structure 43 is structured in the valve plug 40, below the window 31. Because of this, at this time the fluid that arrives at the self-sealing structure 43 through the window 31 and the gap between the inner peripheral wall of the cage 30 and the outer peripheral wall of the valve plug 40 applies pressure to the second thin wall portion 43c in the downward direction, as shown by the arrow in FIG. 1. Because of this, the lower valve seat 33 of the cage 30 is pressed against the lower seating portion 42, which is formed on the outer edge portion of the second thin wall portion 43c, causing the lower valve seat 33 and the lower seating portion 42 to be pressed together more strongly, thus improving the lower valve seat 33 and the lower seating portion 42. The result is the ability to prevent more fully leakage of fluid from between lower valve seat 33 and the lower seating portion 42.

Furthermore, the connecting portions 34d and 43d of the self-sealing structures 34 and 43 are chamfered into curved shapes. As a result, the stresses that are applied to the connecting portions 34d and 43d are dispersed to the surroundings, thus enabling the prevention of concentration of stresses in the connecting portions 34d and 43d. The result is, for example, the ability to more fully prevent fatigue fractures due to repetitive loads.

Moreover, in the self-sealing structure 34, the second ring-shaped groove 34b is formed below (on the upstream side) of the first thin wall portion 34c. Because of this, even if the first thin wall portion 34c were to come off, it would be retained within the second ring-shaped groove 34b, making it possible to prevent the first thin wall portion 34c from flowing out to the downstream side.

Similarly, in the self-sealing structure 43 as well, the fourth ring-shaped groove 43b is formed below (on the downstream side) of the second thin wall portion 43c. Because of this, even if the second thin wall portion 43c were to come off, it would be retained within the fourth ring-shaped groove 43b, making it possible to prevent the second thin wall portion 43c from flowing out to the downstream side.

As explained above, because, in the present embodiment, a self-sealing structure 34 is formed in the upper valve seat 32 of the cage 30 and, additionally, a self-sealing structure 43 is formed in the lower seating portion 42 of the valve plug 40, this can improve the blocking performance of the cage valve 1. Moreover, the blocking can be carried out with a small force. Furthermore, because the self-sealing structures 34 and 43 are formed through machining the inner peripheral wall surface of the cage 30 and the outer peripheral wall surface of the valve plug 40, it can be achieved inexpensively without increasing the number of components in the cage valve.

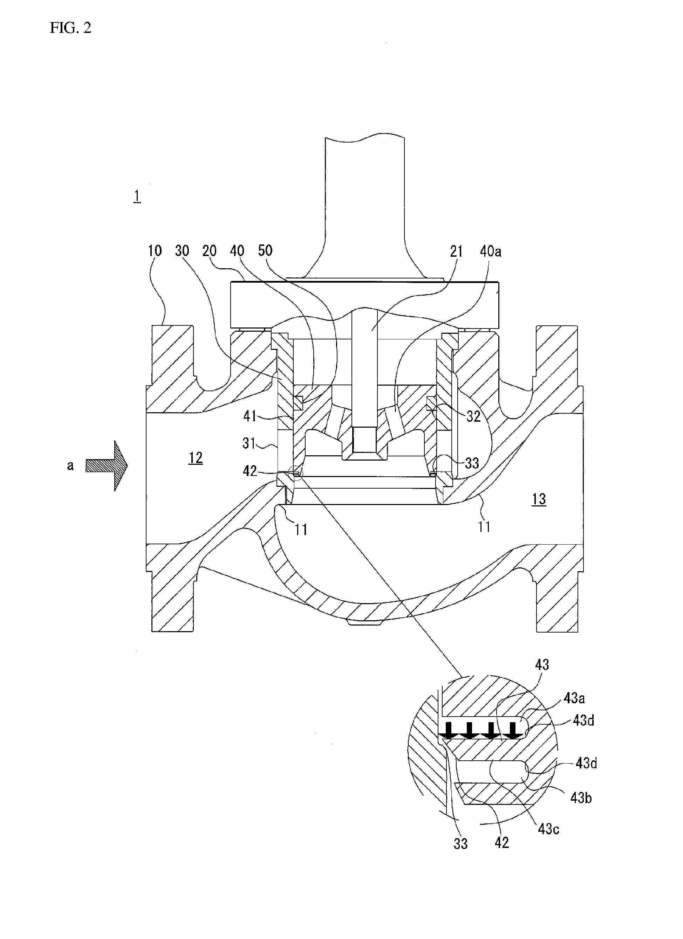

Note that in the present embodiment an example was explained of a case wherein self-sealing structures are provided on both the upper valve seat 32 and the lower seating portion 42, the self-sealing structure may be provided on the upper valve seat 32 or the lower seating portion 42, instead of both. For example, as illustrated in FIG. 2, the self-sealing structure 43 may be formed on the lower seating portion 42 alone. Even this is able to improve the blocking performance of the cage valve 1. Note that in this case, a seal ring 50 may be provided above the upper seating portion 41. Doing so makes it possible to prevent liquid from flowing in from above the valve plug 40.

Moreover, while in the present embodiment the explanation was for an example of a case wherein fluid flowed in from the flow path 12 side, conversely the fluid may flow in from the flow path 13 side instead.

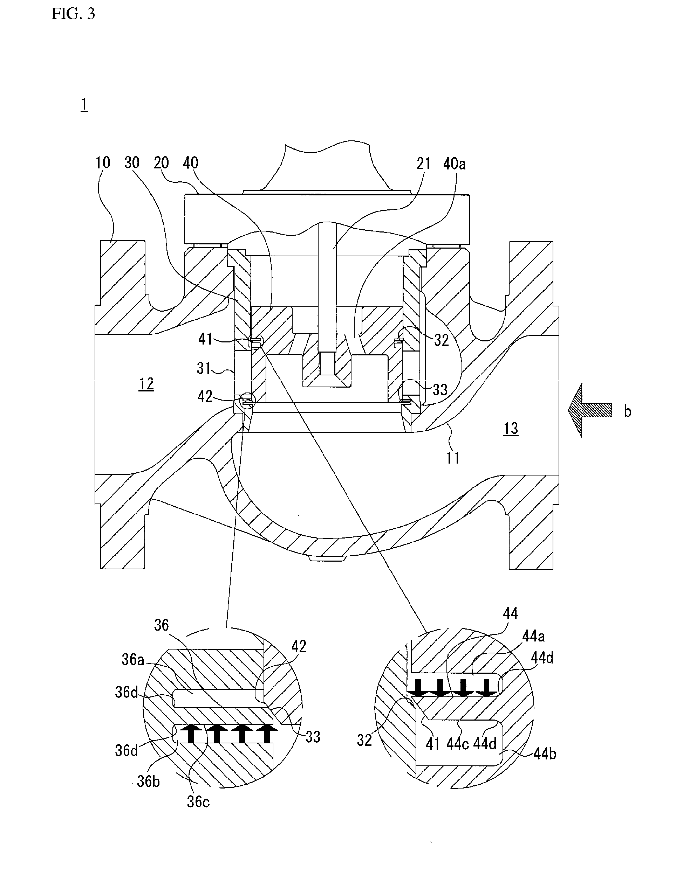

When the fluid is to flow in from the side with the arrow b, shown in FIG. 3, for example, self-sealing structures 36 and 44 may be provided on the lower valve seat 33 and the upper seating portion 41.

Specifically, the self-sealing structure 36 is formed in the bottom end portion of the inner peripheral wall of the cage 30, and is structured from a first ring-shaped groove 36a that is concentric with the axial line of the cage 30, a second ring-shaped groove 36b that is concentric with the axial line of the cage 30, formed below the first ring-shaped groove 36a, and a first ring-shaped thin wall portion 36c that is deformed through bearing the pressure of the fluid, formed between the first ring-shaped groove 36a and the second ring-shaped groove 36b. The first ring-shaped thin wall portion 36c is that which functions as the self-seal, where the lower valve seat 33 is formed on an end portion thereof. Here the first ring-shaped groove 36a and the second ring-shaped groove 36b are formed so as to be parallel with each other, along the circumferential direction of the cage 30. Moreover, a connecting portion 36d, positioned at the boundaries between the first thin wall portion 36c and the bottom portions (roots) of the first ring-shaped groove 36a and second ring-shaped groove 36b are chamfered into curved shapes (shapes wherein the cross-sections are essentially arcs).

Similarly, the self-sealing structure 44 is formed in the center portion of the outer peripheral wall of the valve plug 40, and is structured from a third ring-shaped groove 44a that is concentric with the axial line of the valve plug 40, a fourth ring-shaped groove 44b that is concentric with the axial line of the valve plug 40, formed below the third ring-shaped groove 44a, and a second ring-shaped thin wall portion 44c that is deformed through bearing the pressure of the fluid, formed between the third ring-shaped groove 44a and the fourth ring-shaped groove 44b. The second ring-shaped thin wall portion 44c is that which functions as the self-seal, where the upper seating portion 41 is formed on an end portion thereof. Here the third ring-shaped groove 44a and the fourth ring-shaped groove 44b are formed so as to be parallel with each other, along the circumferential direction of the valve plug 40. Moreover, a connecting portion 44d, positioned at the boundaries between the second thin wall portion 44c and the bottom portions (roots) of the third ring-shaped groove 44a and fourth ring-shaped groove 44b are chamfered into curved shapes (shapes wherein the cross-sections are essentially arcs).

In this way, the provision of the self-sealing structures 36 and 44 is able to improve the blocking performance of the cage valve 1. Moreover, the blocking can be carried out with a small force. Furthermore, because the self-sealing structures 36 and 44 are formed through machining the inner peripheral wall surface of the cage 30 and the outer peripheral wall surface of the valve plug 40, it can be achieved inexpensively without increasing the number of components in the cage valve.

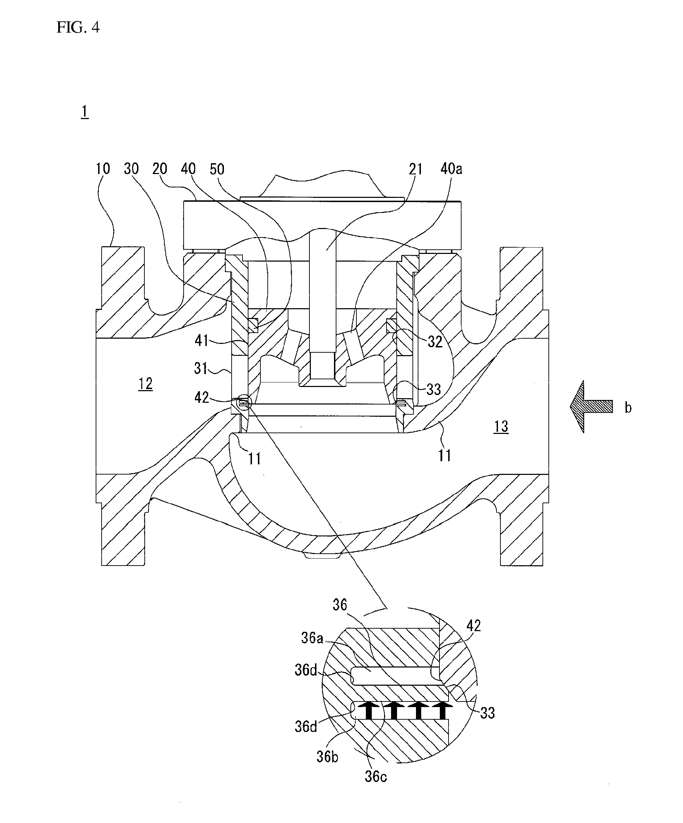

Moreover, while in FIG. 3 self-sealing structures are provided on both the lower valve seat 33 and the upper seating portion 41, the self-sealing structure may be provided on the lower valve seat 33 or the upper seating portion 41, instead of both. For example, as illustrated in FIG. 4, the self-sealing structure 36 may be formed on the lower valve seat 33 alone. Even this is able to improve the blocking performance of the cage valve 1. Note that in this case, a seal ring 50 may be provided above the upper seating portion 41. Doing so makes it possible to prevent liquid from flowing in from above the valve plug 40.

Moreover, while the explanation in the present embodiment is for an example of a case wherein a ring-shaped groove is provided on the downstream side of the ring-shaped thin wall portion, the ring-shaped groove on the downstream side may be omitted instead.

Furthermore, while the explanation in the present embodiment is for an example of a case wherein the cage 30 and valve plug 40 are formed as cylinders, insofar as they are cylindrical there is no limitation to the shapes thereof being circular cylinders, and the shape may be set freely as appropriate.

### [Potential for Use in Industry]

The present invention can be applied to cage valves.

### [Explanation of Codes]

1: Cage Valve
10: Valve Body
20: Bonnet
21: Valve Stem
30: Cage
31: Window
32: Upper Valve seat
33: Lower Valve seat
34: Self-Sealing Structure
34a, 36a: First Ring-Shaped Grooves
34b, 36b: Second Ring-Shaped Grooves
34c, 36c: First Thin Wall Portions
34d, 36d: Connecting Portions
36: Self-Sealing Structure
40: Valve Plug
40a: Balancing Hole
41: Upper Seating portion
42: Lower Seating portion
43: Self-Sealing Structure
43a, 44a: Third Ring-Shaped Grooves
43b, 44b: Fourth Ring-Shaped Grooves
43c, 44c: Second Thin Wall Portions
43d, 44d: Connecting Portions
44: Self-Sealing Structure
50: Seal Ring

## Claims

1. A cage valve comprising:
a valve body having a fluid inflow path and outflow path;
a cylindrical cage, secured within the valve body, having a window connecting to the inflow path and/or the outflow path;
a valve plug for opening/closing the window by sliding within the cage along the axial line of the cage; and
a self-sealing structure, provided in the cage and/or the valve plug, for improving sealing performance between the cage and the valve plug by bearing pressure of a fluid when the valve plug is in a position wherein the window is fully closed; wherein
the self-sealing structure is formed through machining an inner peripheral wall surface of the cage or an outer peripheral wall surface of the valve plug.

2. A cage valve as set forth in Claim 1, wherein:
the valve plug comprises a first seating portion, provided on an outer peripheral wall of a top portion side, and a second seating portion, provided on an outer peripheral wall of a bottom portion side, formed as cylinders with closed tops;
the cage comprises a first valve seat, formed in the inner peripheral wall further toward the first seating portion side than the window, and which contacts the first seating portion removably, and a second seating portion, formed in the inner peripheral wall further toward the second seating portion side than the window, and which contacts the second seating portion removably; and
the self-sealing structure is formed on the second seating portion of the valve plug or on the second seating portion of the valve plug and the first valve seat of the cage, if the fluid is to flow into the cage through the window of the cage from the inflow path and flow out to the outflow path from the bottom portion side of the cage.

3. A cage valve as set forth in Claim 1, wherein:
the valve plug comprises a first seating portion, provided on an outside wall of a top portion side, and a second seating portion, provided on an outer peripheral wall of a bottom portion side, formed as cylinders with closed tops;
the cage comprises a first valve seat, formed in the inner peripheral wall further toward the first seating portion side than the window, and which contacts the first seating portion removably, and a second seating portion, formed in the inner peripheral wall further toward the second seating portion side than the window, and which contacts the second seating portion removably; and
the self-sealing structure is formed on the second valve seat of the cage or on the second valve seat of the cage and the first seating portion of the valve plug, if the fluid is to flow into the cage through the bottom portion side of the cage from the inflow path and flow out to the outflow path from the window of the cage.

4. A cage valve as set forth in any of Claim 1 through Claim 3, wherein:
the self-sealing structure is structured from a first ring-shaped groove and a second ring-shaped groove that are formed in parallel along the circumferential direction of the cage on the inner peripheral wall surface of the cage, and a first ring-shaped thin wall portion, formed between the first ring-shaped groove and the second ring-shaped groove, and that deforms by bearing the pressure of a fluid.

5. A cage valve as set forth in Claim 4, wherein:
boundaries between the first ring-shaped thin wall portion and the bottom portion of the first ring-shaped groove and the second ring-shaped groove are chamfered into curved shapes.

6. A cage valve as set forth in any of Claim 1 through Claim 3, wherein:
the self-sealing structure is structured from a third ring-shaped groove and a fourth ring-shaped groove that are formed in parallel along the circumferential direction of the plug on the outer peripheral wall surface of the valve plug, and a second ring-shaped thin wall portion, formed between the third ring-shaped groove and the fourth ring-shaped groove, and that deforms by bearing the pressure of a fluid.

7. A cage valve as set forth in Claim 6, wherein:
boundaries between the second ring-shaped thin wall portion and the bottom portion of the third ring-shaped groove and the fourth ring-shaped groove are chamfered into curved shapes.
